# EUROPÄISCHE PATENTANMELDUNG

(11) **EP 1 271 737 A1**
(43) Veröffentlichungstag der Anmeldung: **02.01.2003**
(21) Anmeldenummer: 01440193.9
(22) Anmeldetag: 27.06.2001
(51) Int. Cl.: H02G 9/06, H02G 1/08, G02B 6/50

(54) **Vorrichtung zur Fixierung eines Kabels in einem Rohr**

(71) Anmelder: ALCATEL, 75008 Paris (FR)
(72) Erfinder: Nothofer, Klaus, Dipl.-Ing, 40699 Erkrath (DE); Leppert, Hans-Detlef, Dr.rer.nat., 41189 Mönchengladbach (DE); Teschner, Wolfgang, Ing.Grad., 31515 Wunstorf (DE)
(74) Vertreter: Menzietti, Domenico, Dipl.-Ing.

(57) **Zusammenfassung**

Zur Sanierung von Versorgungsleitungen wie Abwasserrohr ist ein Kunststoffschlauch entwickelt worden, der im freien Zustand einen Durchmesser aufweist, der gleich groß oder größer als der Durchmesser des Rohres ist, in dem er eingesetzt werden soll. Dieser Kunststoffschlauch kann erfindungsgemäß gleichzeitig verwendet werden, um optische oder elektrische Kabel an der Innenwand des Rohres zu fixieren. Hierfür wird Vorteilhafterweise der Kunststoffschlauch in einem kollabierten Zustand zusammen mit dem Kabel in das Abwasserrohr eingeführt und bei erreichter gewünschter Positionierung frei gelassen. Dabei wird der kollabierte Kunststoffschlauch seine ursprüngliche Form zurück gewinnen und dadurch das Kabel an die Innenwand des Abwasserrohrs fixieren.

## Beschreibung

Die Erfindung bezieht sich auf eine Vorrichtung zur Fixierung eines optischen oder elektrischen Kabels nach dem Oberbegriff des Anspruches 1 sowie zwei Verfahren zur Fixierung eines optischen oder elektrischen Kabels nach den Oberbegriffen der Ansprüche 4 und 5.

Die Nutzung von Abwasser-, Regenwasser-, Mischwasserkanälen oder anderen End- oder Versorgungsleitungen für die Verlegung von Nachrichtenkabel ist eine bereits genutzte Möglichkeit, Tiefbaukosten für den Teilnehmeranschluss (access) zu senken. Es ermöglicht zudem bedarfsorientiert und schnell einen solchen Teilnehmeranschluss auszubauen, was neuerdings durch die Vielzahl von Betreibern zunehmend an Bedeutung bekommt. Im folgenden soll der Begriff Abwasserkanal (Abwasserrohr) auch den Regenwasserkanal, den Mischwasserkanal und End- sowie Versorgungsleitungen umfassen. Während bei begehbaren Kanälen die vorhandene Standardtechnik zur Verlegung von Nachrichtenkabeln eingesetzt werden kann, sind die Probleme bei nichtbegehbaren Kanälen noch weitestgehend ungelöst.

Bei der Verlegung von Kabeln in nicht begehbaren Abwasserkanälen (Durchmesser kleiner als 20 cm) ist zu beachten, dass
- die hydraulisch nutzbare Querschnittfläche nur geringfügig verringert wird,
- möglichst keine Objekte quer zur Fließrichtung verlegt werden müssen,
- keine Angriffspunkte entstehen, die zur Zupfbildung (z.B. Ansammlung von Schwemm-Materialien) und infolge zur Verstopfung führen können, eine Reinigung des Abwasserkanals nicht behindert wird.

In DE 198 26 880 ist eine Vorrichtung offenbart, die aus einem im Querschnitt ringförmigen Kunststoffelement besteht, welches infolge eines Memory-Eeffekts bei Wärmezufuhr bzw. infolge Befeuchtens seinen Außendurchmesser vergrößert. Dabei wird der umgekehrte Schrumpfeffekt ausgenutzt. Die dortige Vorrichtung ist nach der Formgebung zusammengepresst worden und wird nach einem Wiedererwärmen expandieren. Dieses Wiedererwärmen findet dann im Abwasserkanal statt, so dass diese Vorrichtung an der Innenwand des Abwasserkanals anlehnt. Im gepressten Zustand wurde das Kunststoffelement zusammen mit einem optischen oder elektrischen Kabel in den Abwasserkanal eingeführt. Im expandierten Zustand wird das Kunststoffelement den optischen oder elektrischen Kabel an der Innenwand des Abwasserkanals fixieren.

Kunststoffe, die einen ausgeprägten Memory-Effekt aufweisen, bestehen aus einem relativ teuren Material. Zudem neigt dieser Memory-Effekt mit der Zeit peu à peu nachzulassen. Wenn diese Kunststoffelemente als Schlauch verwendet werden, um gleichzeitig eine Sanierung des Abwasserkanals zu ermöglichen, wird dann der brauchbare Freiraum dieses Abwasserkanals zu sehr eingeschränkt. Somit ergibt sich, dass solche Kunststoffelemente keine ideale Lösung sowohl für die Fixierung von optischen oder elektrischen Kabeln als auch die Sanierung der Abwasserkanäle darstellt.

Der Erfindung liegt die Aufgabe zugrunde, Kunststoffschläuche zu entwickeln, die kostengünstig herstellbar sind und im installierten Zustand im Abwasserkanal eine dauerhafte zufriedenstellende Form bewahren.

Die Aufgabe wird erfindungsgemäß durch eine Vorrichtung zur Fixierung eines optischen oder elektrischen Kabels nach der Lehre des Anspruchs 1, sowie durch die Verfahren zur Fixierung eines optischen oder elektrischen Kabels nach der Lehre der jeweiligen Ansprüche 4 und 5 gelöst.

Die Verwendung von üblichen und kostengünstigen Kunststoffe wie Polyethylen PE oder Polyvinylchlorid PVC kann gewährleistet werden, indem ein Kunststoffschlauch verwendet wird, der im freien Zustand einen Durchmesser aufweist, der gleich groß oder größer als der Durchmesser des Abwasserkanals oder Rohres ist, in dem er eingesetzt wird. Ein solcher erfindungsgemäßer Kunststoffschlauch lässt sich leichter in einem kollabierten Zustand bringen, indem z.B. ein gewisses Vakuum eingesetzt wird. Dieser kollabierte Kunststoffschlauch kann Vorteilhafterweise z.B. axial zusammengerollt werden, um problemlos im Abwasserkanal eingeführt zu werden. Hierbei kann ein fahrbarer Roboter verwendet werden, der den kollabierten zusammengerollten Schlauch in den Abwasserkanal einführt.

Es ist durchaus denkbar, einen solchen erfindungsgemäßen Kunststoffschlauch um ein flexibles Rohr anzulegen, das gegebenenfalls regelmäßige Öffnungen aufweist. Beim Einsetzen eines Vakuumszustand im flexiblen Rohr wird der Kunststoffschlauch auf das flexible Rohr kollabieren. Somit kann dann dieser Kunststoffschlauch leicht zusammen mit dem flexiblen Rohr in den Abwasserkanal eingeführt werden, gegebenenfalls sogar ohne Roboter. Nach Lösen des Vakuumszustands durch Einlassen von einem Element wie Luft, Gas oder Flüssigkeit in das flexible Rohr, wird dieses Element über den regelmäßigen Öffnungen des flexiblen Rohrs in den kollabierten Kunststoffschlauch eindringen. Letzterer wird somit seine ursprüngliche Form gewinnen wollen und dadurch sich an die Innenwand des Abwasserkanals über dessen Gesamtlänge anlegen.

Vorteilhafte Ausgestaltungen der Erfindung ergeben sich aus den abhängigen Ansprüchen, der nachfolgenden Beschreibung und den Zeichnungen.

Ein Ausführungsbeispiel der Erfindung wird nun unter Zuhilfenahme der Fig. 1 bis 6 erläutert.

Es zeigen:
- Fig. 1: ein Rohr z.B. Abwasserrohr,
- Fig. 2: einen erfindungsgemäßen Kunststoffschlauch im freien Zustand,
- Fig. 3: einen erfindungsgemäßen Kunststoffschlauch im kollabierten Zustand,
- Fig. 4: ein Kabel z.B. ein Telekommunikationskabel,
- Fig. 5: die Einführung des kollabierten Kunststoffschlauches zusammen mit dem Kabel in das Rohr,
- Fig. 6: die Fixierung des Kabels im Rohr.

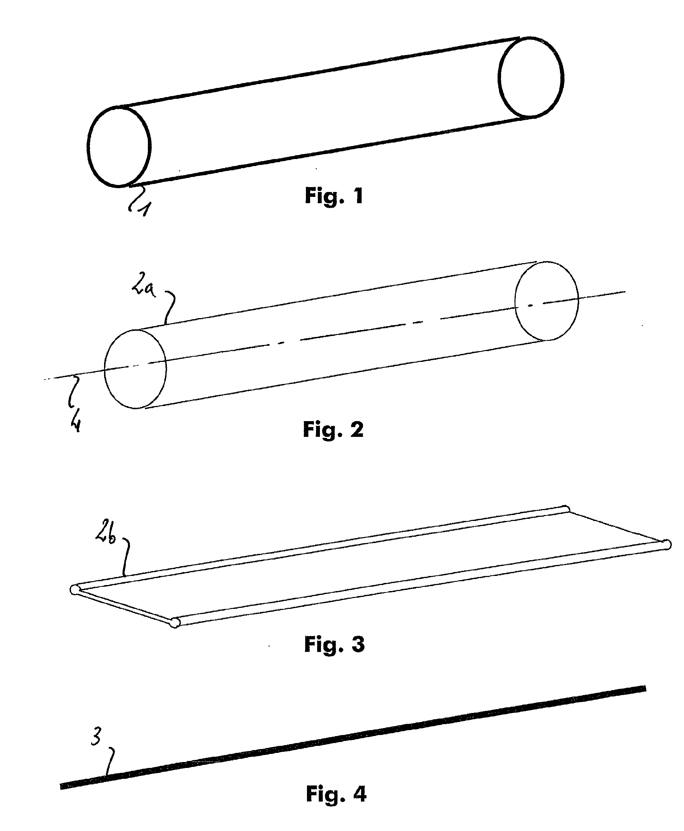

In Fig. 1 ist ein Rohr 1 z.B. Abwasserrohr oder Abwasserkanal gezeichnet, das einen bestimmten Querschnitt aufweist. Dieses Rohr kann z.B. die letzte seitliche Strecke zum Teilnehmeranschluss bilden.

In Fig. 2 ist ein erfindungsgemäßer Kunststoffschlauch 2a im freien Zustand gezeichnet. Er weist einen ringförmigen Querschnitt auf, der gleich groß oder größer als der Durchmesser des Rohres 1 bzw. der Innendurchmesser dieses Rohres 1 in dem er verlegt wird, ist. Er ist aus einem üblichen Kunststoff wie PE oder PVC gebildet. Beim Einsetzen eines Vakuums in diesen Schlauch 2a, wird er entlang seiner Achse 4 kollabieren. Dieser kollabierte Zustand 2b ist in Fig. 3 gezeichnet. Der Kunststoffschlauch in diesem kollabierten Zustand lässt sich leicht entlang seiner Achse aufrollen, solange der Vakuumszustand gewährleistet ist. Deshalb müssen die jeweiligen Enden abgedichtet werden.

In Fig. 4 ist ein typisches Kabel, wie für Telekommunikationszwecke verwendet, d.h. ein reines optisches oder elektrisches oder kombiniertes Kabel gezeichnet.

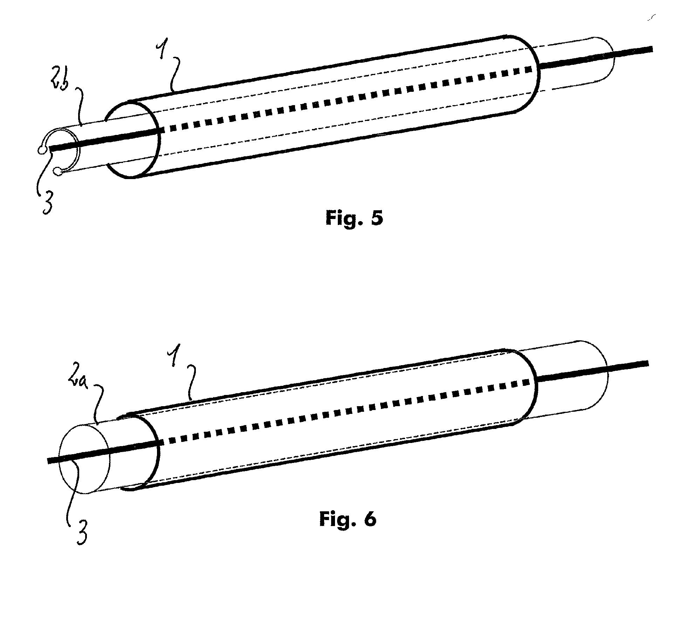

In Fig. 5 ist der Kunststoffschlauch im kollabierten Zustand 2b zusammen mit dem Kabel 3 in das Rohr 1 eingeführt. Es ist dabei deutlich zu erkennen, dass der Kunststoffschlauch im kollabierten Zustand 2b im Querschnitt deutlich kleiner ist als der Querschnitt des Rohres 1. Deshalb wird die Einführung dieses Kunststoffschlauches zusammen mit dem zu fixierenden Kabel leicht erfolgen können.

Nach Abschluss der Einführung des Kunststoffschlauches zusammen mit dem Kabel können die Dichtungen vernichtet oder entfernt werden. Dadurch soll der Kunststoffschlauch seine ursprüngliche Form wieder gewinnen können. Gegebenenfalls kann hierfür ein Element wie Luft, Gas oder Flüssigkeit im Kunststoffschlauch eingelassen.

In Fig. 6 ist der Zustand gezeigt, bei dem der Kunststoffschlauch 2a die Innenwand des Rohres 1 überdeckt und gleichzeitig das Kabel 3 an diese Innenwand fixiert.

Es ist durchaus Möglich und in einigen Fällen vorteilhaft den Kunststoffschlauch mit Hilfe eines flexiblen Rohres in das Rohr 1 einzuführen. Dabei kann dieses flexible Rohr Öffnungen aufweisen, um leichter den Kunststoffschlauch entlang dessen gesamter Länge gleichmäßig zum Kollabieren zu bringen, indem der Vakuumzustand über dieses flexible Rohr an den Kunststoffschlauch übertragen wird. Der kollabierte Kunststoffschlauch 2b kann zusammen mit dem flexiblen Rohr gegebenenfalls ohne fahrbaren Roboter in das Rohr 1 eingeführt werden. Beim Einlassen von einem Element wie Luft, Gas oder einer Flüssigkeit in dieses flexible Rohr wird der kollabierte Kunststoffschlauch 2b seine ursprüngliche Form zurück gewinnen wollen.

Durch Wahl eines Querschnittes für den Kunststoffschlauch im freien Zustand gleich groß oder sogar deutlich größer als der Durchmesser des Rohres in dem er eingeführt wird, ist gewährleistet, dass dieser Kunststoffschlauch seine Form dauerhaft behält. Dadurch kann eine Sanierung von Abwasserkanälen und/oder Fixierung von Telekommunikationskabeln an der Innenwand solcher Abwasserkanäle günstig erfolgen.

## Patentansprüche

1. Vorrichtung zur Fixierung eines optischen oder elektrischen Kabels (3) an der Innenwand eines Rohres (1) vorzugsweise eines nicht begehbaren Abwasserrohres mit Hilfe eines im Querschnitt ringförmigen Kunststoffschlauches (2a, 2b) **dadurch gekennzeichnet, dass** der Kunststoffschlauch (2a, 2b) im freien Zustand einen Durchmesser aufweist, der gleich groß oder größer als der Durchmesser des Rohres (1) ist.

2. Vorrichtung nach Anspruch 1, **dadurch gekennzeichnet, dass** der Kunststoffschlauch (2a, 2b) im kollabierten Zustand einen Durchmesser aufweist, der kleiner als der Durchmesser des Rohres (1) ist.

3. Vorrichtung nach Anspruch 2, **dadurch gekennzeichnet, dass** der Kunststoffschlauch (2a, 2b) im kollabierten Zustand ein flexibles Rohr umgibt, das gegebenenfalls regelmäßige Öffnungen aufweist.

4. Verfahren zur Fixierung eines optischen oder elektrischen Kabels (3) an der Innenwand eines Rohres (1) vorzugsweise eines nicht begehbaren Abwasserrohres mit Hilfe eines im Querschnitt ringförmigen Kunststoffschlauches (2a, 2b) **dadurch gekennzeichnet, dass** der Kabel (3) zusammen mit einem Kunststoffschlauch (2a, 2b) nach Anspruch 1 im kollabierten Zustand in das Rohr (1) eingeführt wird, und nach korrekte Positionierung in diesem Rohr fixiert wird, in dem ein Element wie Luft, Gas oder Flüssigkeit in diesem Kunststoffschlauch eingelassen wird.

5. Verfahren zur Fixierung eines optischen oder elektrischen Kabels (3) an der Innenwand eines Rohres (1) vorzugsweise eines nicht begehbaren Abwasserrohres mit Hilfe eines im Querschnitt ringförmigen Kunststoffschlauches (2a, 2b) **dadurch gekennzeichnet, dass** der Kabel (3) zusammen mit einem Kunststoffschlauch (2a, 2b) nach Anspruch 3 im kollabierten Zustand in das Rohr (1) eingeführt wird, und nach korrekte Positionierung in diesem Rohr fixiert wird, in dem ein Element wie Luft, Gas oder Flüssigkeit in dem flexiblen Rohr eingelassen wird.
